# EUROPEAN PATENT APPLICATION

(11) **EP 4 437 854 A1**
(43) Date of publication of application: **02.10.2024**
(21) Application number: 22916587.3
(22) Date of filing: 20.12.2022
(51) Int. Cl.: A23G 9/32, A23G 9/34, A23L 33/21, A23P 20/10, A23G 9/04

(54) **COMPOSITION FOR PRODUCING ICE CREAM AND PREPARATION METHOD THEREFOR**

(30) Priority: 29.12.2021 KR 20210191607
(71) Applicant: CJ CheilJedang Corporation, Seoul 04560 (KR)
(72) Inventor: LEE, Minhyun, Seoul 04560 (KR); KIM, Sunny, Seoul 04560 (KR); KONG, Moon Hee, Seoul 04560 (KR); JUNG, Jiwoo, Seoul 04560 (KR); KIM, Chul Jin, Seoul 04560 (KR)
(74) Representative: Mewburn Ellis LLP
(86) International application number: PCT/KR2022/020843
(87) International publication number: WO 2023/128445

(57) **Abstract**

Provided are a composition for preparing an ice cream, a preparation method thereof, and an ice cream comprising the composition.

## Description

### [Technical Field]

The present disclosure relates to a composition for preparing an ice cream, a preparation method thereof, and an ice cream comprising the composition.

### [Background Art]

Ice cream is a frozen food product made by mixing milk or other dairy products with sweeteners and flavors, etc., and is one of the desserts widely loved around the world.

To make ice cream, food ingredients containing a lot of fat or being high in calories, such as milk or sugar, etc., must be used as main ingredients, and because of this, even though a small amount of ice cream is consumed, it leads to a significant intake of calories and fat. Moreover, the tempting soft taste and sweet taste can lead to excessive consumption, particularly, in young consumers, which may cause childhood obesity and childhood diabetes, etc., and furthermore, adult diseases including hyperlipidemia, obesity, diabetes, etc., pose a significant concern.

In this regard, in order to develop foods with reduced sugars, many sweeteners such as sugar alcohols and high-intensity sweeteners have been applied to replace sugar. However, there are problems that sweeteners have different sweetness profiles and mouthfeel from sugar and different sweetness persistence from sugar, and have residual aftertaste, bitter and astringent tastes, which reduce preference, and contain a large amount of synthetic additives.

In addition, when creating sweetness using sugar alcohols and high-intensity sweeteners without adding saccharides such as sugar, it is difficult to achieve uniform sweetness because the high-intensity sweetener, which is a trace ingredient, is difficult to disperse evenly when mixing powder for making ice cream, and ice cream easily melts during preparation due to its lowered hardness, which reduces productivity and makes it difficult to maintain the original texture of ice cream.

Accordingly, there is a need for the development of ice cream that has a low saccharide content and low calories while maintaining the original physical properties and sweetness of ice cream.

### [Prior Art Documents]

### [Patent Documents]

(Patent Document 0001) Korean Patent Publication No. 10-2011-0018989
(Patent Document 0002) Korean Patent No. 10-0926638

### [Disclosure]

### [Technical Problem]

The present inventors have developed a composition for preparing an ice cream with a reduced sugar content and improved hardness and sweetness, a preparation method thereof, and an ice cream comprising the composition, thereby completing the present disclosure.

### [Technical Solution]

An object of the present disclosure is to provide a composition for preparing an ice cream, the composition comprising sucrose, sugar alcohol, a high-intensity sweetener, and a soluble dietary fiber, wherein the sucrose and the sugar alcohol are comprised in the form of being coated with the high-intensity sweetener and the soluble dietary fiber.

Another object of the present disclosure is to provide an ice cream comprising the composition.

Still another object of the present disclosure is to provide a method of preparing the composition for preparing an ice cream.

Still another object of the present disclosure is to provide a composition for preparing an ice cream, which is prepared by the above method.

Still another object of the present disclosure is to provide an ice cream comprising the composition.

### [Advantageous Effects]

A composition for preparing an ice cream of the present disclosure replaces sucrose by sugar alcohol and a high-intensity sweetener at a predetermined ratio to prepare an ice cream having reduced saccharides and improved hardness and sweetness, thereby having excellent effects of increasing productivity and consumers' preference.

### [Detailed Description of Preferred Embodiments]

The present disclosure will be described in detail as follows. Meanwhile, each description and embodiment disclosed in this disclosure may also be applied to other descriptions and embodiments. That is, all combinations of various elements disclosed in this disclosure fall within the scope of the present disclosure. Further, the scope of the present disclosure is not limited by the specific description described below. Further, a number of papers and patent documents are referenced and cited throughout this specification. The disclosures of the cited papers and patent documents are incorporated herein by reference in their entirety to further clarify the level and scope of the subject matter to which the present disclosure pertains.

An aspect of the present disclosure provides a composition for preparing an ice cream, the composition comprising sucrose, sugar alcohol, a high-intensity sweetener, and a soluble dietary fiber, wherein the sucrose and the sugar alcohol are comprised in the form of being coated with the high-intensity sweetener and the soluble dietary fiber.

Generally, the composition for preparing an ice cream is instantaneously produced and served through a freezer by mixing with milk. When creating sweetness using sugar alcohols and high-intensity sweeteners without adding saccharides such as sucrose, the hardness of ice cream is lowered, as compared to that of ice cream containing saccharides such as sucrose, due to its lower solid content than the existing sucrose content, and thus the ice cream melts easily during manufacturing, and there is a problem in that it is difficult to maintain the original physical properties of ice cream.

The composition for preparing an ice cream of the present disclosure replaces sucrose by sugar alcohol and a high-intensity sweetener at a predetermined ratio, and includes the sucrose and the sugar alcohol in the form of being coated with the high-intensity sweetener and soluble dietary fiber, thereby preparing an ice cream that is low in calories by reducing the saccharide content, as compared to the existing products, while having improved hardness and maintaining uniform sweetness and the original physical properties of ice cream. Accordingly, there is an excellent effect of increasing productivity and consumers' preference.

Specifically, the coated form may refer to a core-shell structure, but is not limited thereto. More specifically, sucrose, sugar alcohol, or a combination thereof may be comprised in a core-shell structure of being coated with a shell layer, wherein the shell layer may comprise the high-intensity sweetener and soluble dietary fiber, but is not limited thereto.

Specifically, the soluble dietary fiber may be comprised in an amount of 1 part by weight to 5 parts by weight, specifically, 2 parts by weight to 4 parts by weight, and more specifically, 2.5 parts by weight to 3.5 parts by weight, based on the total 100 parts by weight of the composition, but is not limited thereto.

By including the soluble dietary fiber within the above range, it is possible to improve the hardness and texture of ice cream and to prepare an ice cream that maintains the original physical properties of ice cream. When the soluble dietary fiber is comprised in an amount of less than 1.5 parts by weight, the effect of maintaining the physical properties may be insignificant, and when it is comprised in an amount of more than 5 parts by weight, ice cream may stick to the inside of an ice cream machine or the texture of ice cream become sticky, reducing preference.

Specifically, the soluble dietary fiber may be one or more selected from the group consisting of inulin, non-digestible (or indigestible) maltodextrin, branched maltodextrin, and polydextrose, more specifically, inulin and non-digestible maltodextrin, but is not limited thereto, and any soluble dietary fiber may be included as long as it is a general soluble dietary fiber (non-digestible saccharides).

For example, when the soluble dietary fiber is two or more types, specifically, inulin and non-digestible maltodextrin, the non-digestible maltodextrin may be comprised in the shell layer and the inulin may be comprised in the composition, but are not limited thereto.

The non-digestible maltodextrin (resistant maltodextrin) is a class of dietary fiber (polysaccharides) which is indigestible in the human body, and is characterized by having a high molecular weight carbohydrate structure having a higher degree of carbohydrate polymerization than regular maltodextrin. When the non-digestible maltodextrin is not in a liquid form, it contains 80% or more of dietary fiber, and those purchased commercially or produced directly may be used.

When the non-digestible maltodextrin is comprised, it may be comprised in the shell layer upon spray-coating in a core-shell form, thereby increasing the core-shell adhesion.

In addition, when the inulin is comprised, it is possible to compensate for the decrease in texture which occurs in products in which sucrose is replaced by sugar alcohol and high-intensity sweetener and to maintain the physical properties of ice cream.

Specifically, when the soluble dietary fiber is inulin and non-digestible dextrin, the inulin and non-digestible dextrin may be comprised at a mixing ratio of 13 : 1 to 15 : 1, but is not limited thereto.

Specifically, the sucrose may be comprised in an amount of 40 parts by weight to 60 parts by weight, specifically, 45 parts by weight to 55 parts by weight, and more specifically, 50 parts by weight to 55 parts by weight, based on the total 100 parts by weight of the composition, but is not limited thereto.

The sucrose used in the present disclosure is not particularly limited, and sucrose commonly used in the relevant technical fields or similar fields may be used. Preferably, refined sugar may be used.

The composition for preparing an ice cream of the present disclosure replaces sucrose by sugar alcohol and high-intensity sweetener at a predetermined ratio, thereby reducing saccharides by about 30% or more, as compared to existing products.

Specifically, the sugar alcohol may be comprised in an amount of 25 parts by weight to 40 parts by weight, specifically, 25 parts by weight to 35 parts by weight, and more specifically, 28 parts by weight to 32 parts by weight, based on the total 100 parts by weight of the composition, but is limited thereto.

When the sugar alcohol is comprised in the above range, it may effectively replace sucrose while maintaining sweetness, as compared to existing products, and therefore, it is possible to reduce saccharides. When the sugar alcohol is comprised in an amount of less than 25 parts by weight, it is difficult to maintain sweetness, and when it is comprised in an amount of more than 40 parts by weight, it has a sweetness profile (e.g., loss of sweetness in the aftertaste, etc.) and physical properties different from sucrose, and accordingly, there is a problem that preference decreases, and there is a problem that physical properties deteriorate, e.g., ice cream melts too quickly when stored.

In addition, the sugar alcohol may be one or more selected from the group consisting of erythritol, tagatose, xylose, arabinose, ribose, xylitol, lactitol, maltitol, and sorbitol, specifically, erythritol, but is limited thereto.

The erythritol is a sugar alcohol that is known to have a sweetness profile most similar to white sugar. Its sweetness is about 70% of that of sucrose, and it has very low calories of 0 kcal/g to 0.2 kcal/g. Since the erythritol has the physical property of being excreted out of the body, it does not affect insulin. For this reason, it is often used in a diabetic or low-carbohydrate diet. In the case of other sugar alcohol-based sweeteners, ingestion of 10 g or more per day may cause indigestion and osmotic diarrhea, and therefore, the amount of intake must be controlled. In contrast, erythritol is absorbed into the small intestine immediately after ingestion, and does not remain in the stomach for long, and thus causes less diarrhea than other sugar alcohol-based sweeteners. Therefore, when the erythritol is comprised, it may be usefully applied to the production of low-calorie products.

Specifically, the high-intensity sweetener may be comprised in an amount of 0.01 part by weight to 0.2 parts by weight, specifically, 0.02 parts by weight to 0.15 parts by weight, and more specifically, 0.05 parts by weight to 0.15 parts by weight, based on the total 100 parts by weight of the composition, but is not limited thereto.

When the high-intensity sweetener is comprised in the above range, it may have similar sweetness to when using the same amount of sucrose, it is possible to mask off-taste and off-flavor of the composition, and dissolution and dispersion may be improved upon spray-coating in a core-shell form. When the amount of high-intensity sweetener added is too small, its sweetness is lower than that of sucrose, and therefore, it is difficult to obtain the effect of increasing sweetness by mixing the high-intensity sweetener. On the contrary, when these sweeteners are used in large quantities, there is a problem of producing a bitter taste unique to the high-intensity sweeteners, because they are not able to provide the perfect sucrose-like sweetness even though the high-intensity sweeteners are products with improved bitterness and aftertaste.

In addition, the high-intensity sweetener may be one or more selected from the group consisting of enzyme-treated stevia, stevioside, sucralose, aspartame, a monk fruit extract, a licorice extract, and thaumatin, specifically, enzyme-treated stevia and/or stevioside, but is not limited thereto.

The enzyme-treated stevia (Glucosyl-Stevia) is obtained by adding glucose to stevioside using glycosyltransferase, and is a taste-improved product obtained by removing the bitter taste and aftertaste unique to stevioside.

Stevioside is a high-intensity sweetener classified as a natural additive, and is a natural sweetener produced by extracting the leaves of stevia (plant of the family *Asteraceae, Stevia rebaudiana Bertoni*) and refining the extract, and is a heat-and pH-stable sweetener, and its sweetness is about 200 times that of sucrose. However, even though stevioside has a superior sweetness compared to sucrose, it has disadvantages of leaving a long-lasting aftertaste and having a bitter and unpleasant taste in addition to the sweet taste. The stevioside may be stevioside, rebaudioside A, rebaudioside B, rebaudioside C, rebaudioside D, rebaudioside E, rubusoside, dulcoside A, stevioside, or a mixture thereof, but is not limited thereto, and any high-intensity sweetener may be used, as long as it is used by those skilled in the art to impart sweetness.

The high-intensity sweetener is known to have its own bitter taste. Therefore, the bitter taste of the high-intensity sweetener may be reduced and its preference may be increased by mixing with the sugar alcohol, specifically, erythritol. Accordingly, it is possible to provide an ice cream having significantly reduced calories while maintaining sweetness, hardness, and physical properties, as compared to the existing ice cream products using sucrose.

The composition for preparing an ice cream of the present disclosure may further include yogurt powder, skim milk powder, citric acid, a flavoring agent, or a stabilizer.

Specifically, the yogurt powder and skim milk powder are added as milk raw materials, and their content and type are not particularly limited, and milk raw materials commonly used in the relevant technical fields or similar fields may be used.

Specifically, the stabilizer may include guar gum, xanthan gum, gum arabic, locust bean gum, carrageenan gum, carboxymethylcellulose gum, gellan gum, pectin, etc., but is not limited thereto. The stabilizer may be used as a thickener, and is an ingredient that controls viscosity of products. The stabilizer may have a significant impact on stability, texture, and usability of products, and may create the texture of ice cream.

The citric acid and the flavoring agent may be used to enhance the savor or flavor of ice cream. The content and type thereof are not particularly limited, and citric acid and flavoring agent commonly used in the relevant technical fields or similar fields may be used.

For example, the flavoring agent may be a yogurt flavoring agent, but is not limited thereto.

In addition, the composition for preparing an ice cream of the present disclosure may further comprise an acidity regulator, sodium caseinate, refined salt, etc. In addition, the composition for preparing an ice cream of the present disclosure may further comprise known materials that are generally used to prepare compositions for preparing ice cream.

The composition for preparing an ice cream of the present disclosure is not limited to its form, as long as it is a composition suitable for preparing ice cream, such as powder, liquid, or solid, etc., specifically, the composition may be in the form of powder.

For example, the composition for preparing an ice cream of the present disclosure may be an ice cream powder mix which may be mixed with milk and used to instantaneously produce ice cream through a freezer.

Another aspect of the present disclosure provides an ice cream comprising the composition.

The composition is as described above.

Specifically, the ice cream may further comprise water or milk in addition to the composition for preparing an ice cream.

Specifically, the ice cream may have improved hardness, as compared to those in which the sucrose and the sugar alcohol are not coated with the high-intensity sweetener and the soluble dietary fiber.

Specifically, the ice cream may have improved preference, as compared to those in which the sucrose and the sugar alcohol are not coated with the high-intensity sweetener and the soluble dietary fiber.

Still another aspect of the present disclosure provides a method of preparing the composition for preparing an ice cream.

The composition for preparing an ice cream is as described above.

Specifically, provided is a method of preparing a composition for preparing an ice cream, the method comprising the steps of: preparing a mixture by mixing sucrose and sugar alcohol; preparing a solution by dissolving a high-intensity sweetener and a soluble dietary fiber in water; coating the mixture by spraying the solution; and drying the coated mixture with hot air.

Specifically, the method may further comprise the step of mixing the dry mixture with inulin, but is not limited thereto.

Specifically, the sucrose may be comprised in an amount of 40 parts by weight to 60 parts by weight, based on the total 100 parts by weight of the composition, the sugar alcohol may be comprised in an amount of 25 parts by weight to 40 parts by weight, based on the total 100 parts by weight of the composition, the high-intensity sweetener may be comprised in an amount of 0.01 part by weight to 0.2 parts by weight, based on the total 100 parts by weight of the composition, and the soluble dietary fiber may be comprised in an amount of 1 part by weight to 5 parts by weight, based on the total 100 parts by weight of the composition, but is not limited thereto.

Specifically, the content of the soluble dietary fiber may refer to the total content of one or more types of soluble dietary fibers, including both the dietary fiber comprised in the solution and the dietary fiber separately mixed in the composition.

Specifically, the dietary fiber comprised in the solution and the dietary fiber separately mixed in the composition may be one or more selected from the group consisting of inulin, non-digestible maltodextrin, branched maltodextrin, and polydextrose, more specifically, inulin and non-digestible maltodextrin, but are not limited thereto, and any regular soluble dietary fiber (non-digestible saccharides) may be comprised.

For example, the non-digestible maltodextrin may be comprised in the solution, and the inulin may be added to the dry mixture to be comprised in the composition, but are not limited thereto.

In this case, the non-digestible maltodextrin may be comprised in an amount of 0.1 part by weight to 0.3 parts by weight, based on the total 100 parts by weight of the composition, and the inulin may be comprised in an amount of 2 parts by weight to 3.5 parts by weight, based on the total 100 parts by weight of the composition, but are not limited thereto.

Hereinbelow, the method of preparing the composition for preparing an ice cream of the present disclosure will be described in detail.

First, the sucrose and sugar alcohol are mixed to prepare a mixture.

Meanwhile, the high-intensity sweetener and non-digestible maltodextrin are dissolved in water to prepare a solution.

The step of preparing the mixture and the step of preparing the solution may be performed simultaneously or sequentially, and any of the steps may be performed first.

Subsequently, the solution is coated onto the mixture by spraying.

Specifically, a small amount of high-intensity sweetener and non-digestible maltodextrin are dissolved in water, followed by spray coating, and as a result, a small amount of high-intensity sweetener is evenly dispersed to even out sweetness throughout a product, thereby maintaining quality of the product.

In addition, adhesion between the crystals included in the mixture and the solution may be increased by comprising the non-digestible maltodextrin.

For example, due to the step of spray coating, a core-shell structure may be prepared, in which the sucrose, sugar alcohol, or a combination thereof exists in a core part, and the core part is coated with a shell layer, but is not limited thereto.

Subsequently, the coated mixture is dried with hot air.

Specifically, the drying step may be performed in a temperature range of 80°C to 95°C, for example, 80°C to 90°C, specifically, 85°C, for 5 minutes to 20 minutes, for example, for 5 minutes to 15 minutes, specifically, for 10 minutes, but is not limited thereto.

When the composition for preparing an ice cream of the present disclosure is in a powder form, an increase in the moisture content activates microbial growth, causing quality deterioration. For this reason, through the drying step, moisture conditions that are able to inhibit microbial growth in products may be created, and in the next step, other raw materials may be mixed under appropriate conditions. When dried at a temperature higher than the above temperature range, the sucrose melts, and thus it is difficult to form the core-shell, and when dried at a temperature lower than the above temperature range, moisture conditions become suitable for microbial growth, which may cause quality deterioration.

Subsequently, the composition is prepared by optionally mixing the dry mixture with inulin and auxiliary raw materials.

The auxiliary raw materials may be yogurt powder, skim milk powder, citric acid, a flavoring agent, or a stabilizer, but are not limited thereto.

In addition, the auxiliary raw materials may further include an acidity regulator, sodium caseinate, refined salt, etc., and may further include known materials generally used in preparing the composition for preparing an ice cream.

Still another aspect of the present disclosure provides a composition for preparing an ice cream, which is prepared by the above method.

The method and the composition for preparing an ice cream are as described above.

Still another aspect of the present disclosure provides an ice cream comprising the composition.

The method and the composition for preparing an ice cream are as described above.

Specifically, the ice cream may have improved hardness, as compared to those without the soluble dietary fiber and the core-shell structure, but is not limited thereto.

Specifically, the ice cream may have improved preference, as compared to those without the soluble dietary fiber and the core-shell structure, but is not limited thereto.

Specifically, the ice cream may have improved hardness and sweetness, as compared to an ice cream comprising a composition which is prepared by a method that does not comprise a spray coating process.

### [Mode for Carrying Out the Invention]

Hereinafter, the present disclosure will be described in more detail by way of exemplary embodiments. However, the following exemplary embodiments are only preferred embodiments for illustrating the present disclosure, and thus are not intended to limit the scope of the present disclosure thereto. Meanwhile, technical matters not described in the present specification may be sufficiently understood and easily implemented by those skilled in the technical field of the present disclosure or similar technical fields.

### Preparation Example 1. Preparation of Powder for Preparing Ice Cream

Each powder for preparing an ice cream of Example and Comparative Examples 1 to 4 was prepared using compositions (weight unit: g) as shown in Table 1 below.

**[Table 1]**

| Compositio n (parts by weight) | Supplier | Exampl e | Comparativ e Example 1 | Comparativ e Example 2 | Comparativ e Example 3 | Comparativ e Example 4 |
|---|---|---|---|---|---|---|
| Sucrose | Cheil Jedang | 53.400 | 61.400 | 56.400 | 53.400 | 53.400 |
| Anhydrous glucose | Cheil Jedang | | 15.700 | | | |
| Crystalline fructose | Cheil Jedang | | 10.000 | | | |
| Erythritol | Cheil Jedang | 30.600 | | 30.600 | 30.600 | 30.600 |
| Enzyme-treated stevia | Daepyung | 0.100 | | 0.100 | 0.100 | 0.100 |
| Inulin (dietary fiber) | Vixxol | 2.800 | | | 3.000 | 2.800 |
| Non-digestible maltodextri n (dietary fiber) | Samyang | 0.200 | | | | 0.200 |
| Yogurt powder | WHANEE | 7.000 | 7.000 | 7.000 | 7.000 | 7.000 |
| Skimmed milk powder | Samikdair y | 2.000 | 2.000 | 2.000 | 2.000 | 2.000 |
| Anhydrous citric acid | NamYung | 1.900 | 1.900 | 1.900 | 1.900 | 1.900 |
| Yogurt flavor | | 1.500 | 1.500 | 1.500 | 1.500 | 1.500 |
| Stabilizer | MSC | 0.500 | 0.500 | 0.500 | 0.500 | 0.500 |
| Total | | 100.000 | 100.000 | 100.000 | 100.000 | 100.000 |

### <Example>

In detail, as for Example, sucrose and erythritol were initially mixed in a powder mixer for 10 minutes, enzyme-treated stevia and non-digestible maltodextrin dissolved in hot water were evenly coated by spraying and mixing for 1 minute three times, and hot air of 85°C or higher was applied to the mixer for 10 minutes to remove water. Accordingly, sucrose, sugar alcohol, or a combination thereof may be comprised in the core, and non-digestible maltodextrin and enzyme-treated stevia may be comprised in the coating solution (shell). Next, all the remaining raw materials, inulin, yogurt powder, and yogurt flavor were added and mixed for 10 minutes.

### <Comparative Examples>

Meanwhile, as for Comparative Examples, all raw materials were introduced into a mixer in the same composition as Table 1 and mixed for 20 minutes.

In detail, as for Comparative Example 1, the existing powder composition for preparing ice cream comprising an excessive amount of sucrose was used,
as for Comparative Example 2, the composition comprising sugar alcohol and high-intensity sweetener for reducing saccharides were used,
as for Comparative Example 3, the composition comprising sugar alcohol and high-intensity sweetener for reducing saccharides and simply mixed with inulin were used, and
as for Comparative Example 4, the composition comprsing sugar alcohol and high-intensity sweetener for reducing saccharides and simply mixed with inulin and non-digestible maltodextrin were used.

### Preparation Example 2. Preparation of Soft Ice Cream

In order to evaluate the physical properties and sensory properties of the finished ice cream mix, each of the powder mixes prepared in Example and Comparative Examples 1 to 4 was mixed with milk at a ratio of 1:4 and mixed using a stirrer at 100 rpm for 5 minutes to sufficiently dissolve. The mixture was set to - 6°C using a Tayler Freezer, and the overrun was adjusted to 100% to freeze the ice cream mixture, thereby preparing ice cream samples, respectively. Each sample was taken in a plastic container with a lid, and placed in a deep freezer which was set at -30°C for 30 minutes to undergo a hardening process. Then, each sample was stored in that state for 5 days, and through the freezing-aging process, used as a sample for sensory evaluation and hardness measurement. In Experimental Examples below, ice creams produced using the powder mixes prepared in Example and Comparative Examples 1 to 4 were named Example and Comparative Examples 1 to 4, respectively.

### Experimental Example 1: Hardness Measurement

A known device and method were used to measure the hardness of the ice creams of Example and Comparative Examples 1 to 4 during actual product distribution (Korean Patent No. 10-1049886).

In detail, each sample that had undergone the freezing-aging process was pressed at 25°C by applying downward pressure using a 700 g weight, and the height of the sample was measured over time to measure the holding power and hardness (height, cm) of the product during distribution of each sample, and shown in Table 2 below.

**[Table 2]**

| Time (min) | Example | Comparative Example 1 | Comparative Example 2 | Comparative Example 3 | Comparative Example 4 |
|---|---|---|---|---|---|
| 0 | 30 | 30 | 30 | 30 | 30 |
| 4 | 27 | 27 | 23 | 25 | 25 |
| 6 | 24 | 25 | 20 | 19 | 18 |
| 8 | 23 | 22 | 13 | 15 | 14 |
| 10 | 18 | 19 | 14 | 13 | 12 |
| 12 | 15 | 15 | 10 | 13 | 10 |
| 14 | 13 | 14 | - | 10 | 9 |
| 16 | 10 | 12 | - | - | - |

As a result, as shown in Table 2, the hardness of the ice cream product was measured in the following order: Example = Comparative Example 1 >> Comparative Example 3 > Comparative Example 4 > Comparative Example 2.

In other words, it was confirmed that the ice cream (Example) prepared using the composition for preparing an ice cream of the present disclosure, the composition including a core-shell structure, in which sucrose was replaced by sugar alcohol and high-intensity sweetener at a predetermined ratio, and the sucrose, sugar alcohol, or a combination thereof was coated with a shell layer containing the high-intensity sweetener and soluble dietary fiber, may maintain hardness at the level of the existing products containing excessive sucrose (Comparative Example 1).

It was also confirmed that the hardness of ice cream was remarkably improved, as compared to those of Comparative Example 2 made of the composition without the soluble dietary fiber and Comparative Example 3 and Comparative Example 4 prepared by the method without the spray coating process.

These results confirmed that, in manufacturing an ice cream, the hardness of the ice cream made of the saccharide-reduced ice cream powder increases, and thus the ice cream does not melt easily during manufacturing, and as a result, the ice cream manufacturing speed may be significantly increased. This suggests that efficiency may be improved not only in mass production in factories, but also in cafes and restaurants that directly prepare and sell an ice cream, and consumers' convenience may be improved.

### Experimental Example 2: Sensory Evaluation

Sensory evaluation was conducted on the ice creams of Example and Comparative Example 1 to 4.

In detail, the evaluation was conducted on 30 professional researchers, and the evaluation items were comprehensive preference, sweetness characteristic preference, yogurt flavor preference, and texture characteristic preference. Each item was measured on a 9-point scale.

**[Table 3]**

| | Example | Comparative Example 1 | Comparative Example 2 | Comparative Example 3 | Comparative Example 4 |
|---|---|---|---|---|---|
| Comprehensive preference | 8.4 | 8.8 | 7.3 | 7.2 | 7.0 |
| Sweetness characteristic preference | 8.2 | 8.5 | 7.0 | 6.9 | 6.7 |
| Yogurt flavor preference | 8.1 | 8.4 | 6.8 | 7.1 | 7.4 |
| Texture characteristic preference | 8.0 | 8.7 | 6.4 | 6.7 | 6.6 |

As a result, as shown in Table 3, it was confirmed that the ice cream (Example) made of the composition for preparing ice cream of the present disclosure, the composition comprising a core-shell structure, in which sucrose was replaced by sugar alcohol and high-intensity sweetener at a predetermined ratio, and the sucrose, sugar alcohol, or a combination thereof was coated with a shell layer containing the high-intensity sweetener and soluble dietary fiber, may maintain preference at a similar level to the existing products comprising an excessive amount of sucrose (Comparative Example 1).

It was also confirmed that the preference thereof was remarkably improved, as compared to those of Comparative Example 2 made of the composition without the soluble dietary fiber and by the method without the spray coating process and Comparative Example 3 made of the composition without the non-digestible maltodextrin and by the method without the spray coating process, and in particular, the preference thereof was remarkably improved, as compared to that of Comparative Example 4 prepared by the method without the spray coating process while using the same composition as Example.

These results confirmed that since the composition for preparing an ice cream of the present disclosure replaces sucrose by sugar alcohol and high-intensity sweetener at a predetermined ratio, and comprises a core-shell structure, in which the sucrose, sugar alcohol, or a combination thereof is coated with a shell layer containing the high-intensity sweetener and soluble dietary fiber, it produces an ice cream having a low fat content and low calories by reducing saccharides, as compared to the existing products, while having improved hardness and maintaining uniform sweetness and the original physical properties of ice cream, thereby increasing productivity and consumers' preference.

Based on the above description, it will be understood by those skilled in the art that the present disclosure may be implemented in a different specific form without changing the technical spirit or essential characteristics thereof. In this regard, it should be understood that the above embodiment is not limitative, but illustrative in all aspects. The scope of the disclosure is defined by the appended claims rather than by the description preceding them, and therefore all changes and modifications that fall within the metes and bounds of the claims, or equivalents of such metes and bounds are therefore intended to be embraced by the claims.

## Claims

1. A composition for preparing an ice cream, the composition comprising sucrose, sugar alcohol, a high-intensity sweetener, and a soluble dietary fiber, wherein the sucrose and the sugar alcohol are comprised in the form of being coated with the high-intensity sweetener and the soluble dietary fiber.

2. The composition of claim 1, wherein the sucrose is comprised in an amount of 40 parts by weight to 60 parts by weight, based on the total 100 parts by weight of the composition,
the sugar alcohol is comprised in an amount of 25 parts by weight to 40 parts by weight, based on the total 100 parts by weight of the composition,
the high-intensity sweetener is comprised in an amount of 0.01 part by weight to 0.2 parts by weight, based on the total 100 parts by weight of the composition, and
the soluble dietary fiber is comprised in an amount of 1 part by weight to 5 parts by weight, based on the total 100 parts by weight of the composition.

3. The composition of claim 1, wherein the soluble dietary fiber is one or more selected from the group consisting of inulin, non-digestible maltodextrin, branched maltodextrin, and polydextrose.

4. The composition of claim 3, wherein the soluble dietary fiber is inulin and non-digestible maltodextrin, and
the inulin and non-digestible maltodextrin are comprised at a mixing ratio of 13 : 1 to 15 : 1.

5. The composition of claim 1, wherein the sugar alcohol is one or more selected from the group consisting of erythritol, tagatose, xylose, arabinose, ribose, xylitol, lactitol, maltitol, and sorbitol.

6. The composition of claim 1, wherein the high-intensity sweetener is one or more selected from the group consisting of enzyme-treated stevia, stevioside, sucralose, aspartame, a monk fruit extract, a licorice extract, and thaumatin.

7. The composition of claim 1, wherein the composition is in the form of powder.

8. An ice cream comprising the composition of any one of claims 1 to 7.

9. The ice cream of claim 8, wherein the ice cream has improved hardness, as compared to those in which the sucrose and the sugar alcohol are not coated with the high-intensity sweetener and the soluble dietary fiber.

10. The ice cream of claim 8, wherein the ice cream has improved preference, as compared to those in which the sucrose and the sugar alcohol are not coated with the high-intensity sweetener and the soluble dietary fiber.

11. A method of preparing a composition for preparing an ice cream, the method comprising the steps of:
preparing a mixture by mixing sucrose and sugar alcohol;
preparing a solution by dissolving a high-intensity sweetener and a soluble dietary fiber in water;
coating the mixture by spraying the solution; and
drying the coated mixture with hot air.

12. The method of claim 11, further comprising the step of mixing the dry mixture with inulin.

13. The method of claim 11, wherein the sucrose is comprised in an amount of 40 parts by weight to 60 parts by weight, based on the total 100 parts by weight of the composition,
the sugar alcohol is comprised in an amount of 25 parts by weight to 40 parts by weight, based on the total 100 parts by weight of the composition,
the high-intensity sweetener is comprised in an amount of 0.01 part by weight to 0.2 parts by weight, based on the total 100 parts by weight of the composition, and
the soluble dietary fiber is comprised in an amount of 1 part by weight to 5 parts by weight, based on the total 100 parts by weight of the composition.

14. The method of claim 11, wherein the drying step is performed in a temperature range of 80°C to 95°C for 5 minutes to 20 minutes.

15. A composition for preparing an ice cream, which is prepared by the method of claim 11.

16. An ice cream comprising the composition of claim 15.
